# EUROPEAN PATENT APPLICATION

(11) **EP 1 772 507 A1**
(43) Date of publication of application: **11.04.2007**
(21) Application number: 05109324.3
(22) Date of filing: 07.10.2005
(51) Int. Cl.: C09K 11/06, H05B 33/14

(54) **Light-emitting material**

(71) Applicant: SOLVAY (Société Anonyme), 1050 Bruxelles (BE)
(72) Inventor: Jin, Sung Ho, BUSAN (KR); Jung, Ok-Sang, Keumjeong-gu BUSAN (KR); Kim, Young In, BUSAN (KR); Hyun, Myung Ho, Yeonje-gu BUSAN (KR); Lee, Jae Wook, BUSAN (KR); Yoon, Ung Chang, DongNae-gu BUSAN (KR)
(74) Representative: Jacques, Philippe

(57) **Abstract**

This invention pertains to light emitting materials comprising novel ortho-metalated transition metal complexes [C^N]₂ML, comprising chelate monoionic ligands (L), also called ancillary ligands. It has been surprisingly found that when the ancillary ligand comprises a substituted aromatic ring bearing a substituent possessing adequate electron-donating properties, said ligand (L) advantageously participates in the emission process, significantly shifting emission towards higher energies (blue-shift) and enabling appreciable improvement of the emission efficiency of complexes ∟C^N┘₂ML.

Still objects of the invention are emitting layers comprising said light emitting materials and organic light emitting device comprising said light emitting material.

## Description

This invention relates to a light-emitting material and light-emitting device capable of converting electric energy to light.

Today, various display devices have been under active study and development, in particular those based on electroluminescence (EL) from organic materials.

In the contrast to photoluminesce, i.e. the light emission from an active material as a consequence of optical absorption and relaxation by radiative decay of an excited state, electroluminescence (EL) is a non-thermal generation of light resulting from the application of an electric field to a substrate. In this latter case, excitation is accomplished by recombination of charge carriers of contrary signs (electrons and holes) injected into an organic semiconductor in the presence of an external circuit.

A simple prototype of an organic light-emitting diode (OLED), i.e. a single layer OLED, is typically composed of a thin film of the active organic material which is sandwiched between two electrodes, one of which needs to be semitransparent in order to observe light emission from the organic layer, usually an indium tin oxide (ITO)-coated glass substrate is used as anode.

If an external voltage is applied to the two electrodes, charge carriers, i.e. holes, at the anode and electrons at the cathode are injected to the organic layer beyond a specific threshold voltage depending on the organic material applied. In the presence of an electric field, charge carriers move through the active layer and are non-radiatively discharged when they reach the oppositely charged electrode. However, if a hole and an electron encounter one another while drifting through the organic layer, excited singlet (anti-symmetric) and triplet (symmetric) states, so-called excitons, are formed. Light is thus generated in the organic material from the decay of molecular excited states (or excitons). For every three triplet excitons that are formed by electrical excitation in an OLED, only one symmetric state (singlet) exciton is created.

Many organic materials exhibit fluorescence (i.e. luminescence from a symmetry-allowed process) from singlet excitons : since this process occurs between states of like symmetry it may be very efficient. On the contrary, if the symmetry of an exciton is different from that of the ground state, then the radiative relaxation of the exciton is disallowed and luminescence will be slow and inefficient. Because the ground state is usually anti-symmetric, decay from a triplet breacks symmetry : the process is thus disallowed and efficiency of EL is very low. Thus the energy contained in the triplet states is mostly wasted.

Luminescence from a symmetry-disallowed process is known as phosphorescence. Characteristically, phosphorescence may persist for up to several seconds after excitation due to the low probability of the transition, in contrast to fluorescence which originates in the rapid decay.

However, only a few organic materials have been identified which show efficient room temperature phosphorescence from triplets.

Successful utilization of phosphorescent materials holds enormous promises for organic electroluminescent devices. For example, an advantage of utilizing phosphorescent materials is that all excitons (formed by combination of holes and electrons in an EL), which are (in part) triplet-based in phosphorescent devices, may participate in energy transfer and luminescence. This can be achieved either via phosphorescence emission itself, or using phosphorescent materials for improving efficiency of the fluorescence process as a phosphorescent host or a dopant in a fluorescent guest, with phosphorescence from a triplet state of the host enabling energy transfer from a triplet state of the host to a singlet state of the guest.

In either case, it is important that the light emitting material provides electroluminescence emission in a relatively narrow band centered near selected spectral regions, which correspond to one of the three primary colors, red, green and blue, so that they may be used as a colored layer in an OLED.

As a means for improving the properties of light-emitting devices, there has been reported a green light-emitting device utilizing the emission from ortho-metalated iridium complex [(Ir(PPy)₃ : tris-ortho-metalated complex of iridium (III) with 2-phenylpyridine, Applied Physics Letters, 75, 4 (1999)).

US published application 2002/0034656 discloses several organometallic complexes used as phosphorescent emitters in organic LEDs, preferably compounds of formula L₂MX, wherein L and X are distinct bidentate ligands, X being a monoanionic bidentate ligand and L coordinating to M via atoms of L comprising sp² hybridized carbon and a heteroatom of the ligand, and M being a metal, in general Ir. Examples of ligands L in said document are notably phenylpyridine ligands, which are claimed to participate more in the emission process than does X, the ancillary ligand. In particular, this document discloses, *inter alia,* a compound having formula :

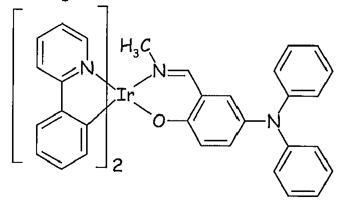

This complex is claimed to act as a hole trap, thanks to the trapping site on the diarylamine subsituent on the salicylanilide group, which is reported not to be involved in the luminescent process.

However, since the foregoing light-emitting materials of the prior art are limited to green, the range within they can be applied as OLED active compound is narrow. It has thus been desired to develop light-emitting materials capable of emitting light having other colors, especially in the blue region.

It is thus a first object of the invention to provide a light emitting material comprising an ortho-metalated complex comprising an ancillary ligand as detailed here below.

Still objects of the invention are emitting layers comprising said light emitting materials and organic light emitting device comprising said light emitting material.

A first object of the invention is to provide for a light emitting material comprising a complex of formula (I) : 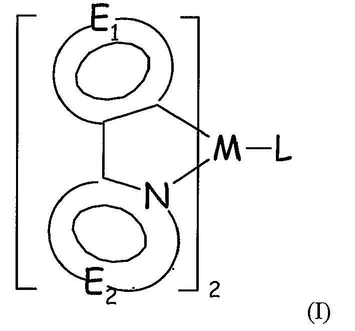 wherein :
M represents a transition metal of atomic number of at least 40, preferably of groups 8 to 12, more preferably Ir or Pt, most preferably Ir;
**E₁** represents a nonmetallic atom group required to form a 5- or 6-membered aromatic or heteroaromatic ring, optionally condensed with additional aromatic moieties or non aromatic cycles, said ring optionally having one or more substituents, optionally forming a condensed structure with the ring comprising E₂, said ring coordinating to the metal M via a sp² hybridized carbon;
**E₂** represents a nonmetallic atom group required to form a 5- or 6-membered heteroaromatic ring, optionally condensed with additional aromatic moieties or non aromatic cycles, said ring optionally having one or more substituents, optionally forming a condensed structure with the ring comprising E₁, said ring coordinating to the metal M via a sp² hybridized nitrogen;
**L** is a chelate monoionic ligand, also designated as ancillary ligand, coordinating to the metal **M** through at least one oxygen atom and at least one sp² hybridized nitrogen atom, comprising at least one aromatic and/or heteroaromatic ring, said ring comprising at least one substituent selected from the group consisting of halogens, such as -Cl, -F, -Br; -OR₀; -SR₀; -N(R₀)₂; -P(OR₀)₂ and -P(R₀)₂; wherein R₀ is a C₁-C₆ alkyl, fluoro- or perfluoroalkyl, e.g. -CH₃, -nC₄H₉, -iC₃H₇, -CF₃, -C₂F₅, -C₃F₇ or a C₁-C₆ alkyl, fluoro- or perfluoroalkyl having one or more ether groups, e.g. -CH₂-(CH₂-O-CH₂)*ₙ*-CH₃, -CH₂-[CH₂(CH₃)-O-CH₂]*ₙ*-CH₃, -(CF₂O)*ₙ*-C₂F₅, with n being an integer from 1 to 8.

The two monoanionic ligands bound to the metal as above specified in formula (I), comprising E₁ and E₂ moieties, are generally denoted as orthometalated ligands (C^N ligands, hereinafter).

It has been surprisingly found that when the chelate monoionic ligand (L), also called ancillary ligand, comprises a substituted aromatic ring bearing a substituent as above defined, possessing adequate electron-donating properties, said ligand (L) advantageously participates in the emission process, significantly shifting emission towards higher energies (blue-shift) and enabling appreciable improvement of the emission efficiency of complexes [C^N]₂ML of formula (I) here above.

Moreover, by means of the chelate monoionic ligand (L) substituted as above specified it is advantageously possible to obtain light emitting materials comprising [C^N]₂ML complexes of formula (I) here above, having maximum emission between 430 nm and 500 nm, thus corresponding to a blue emission.

Suitable examples of complexes complying with formula (I) here above are notably : 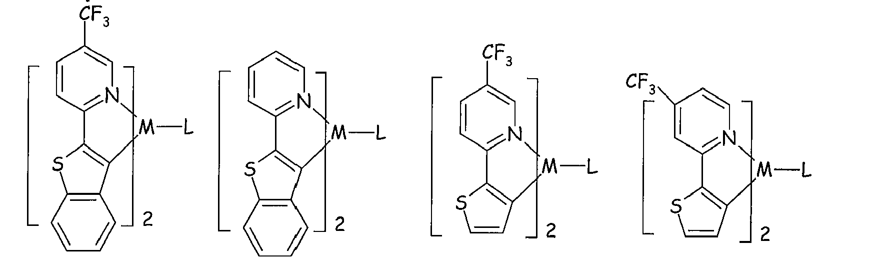 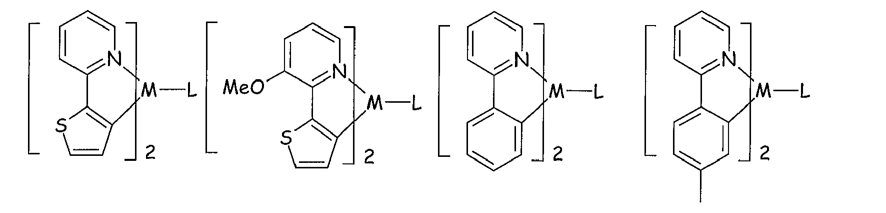 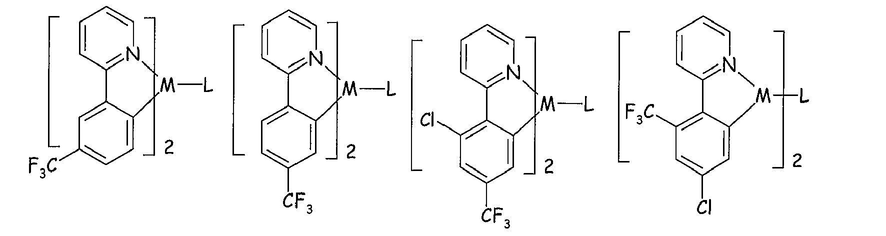 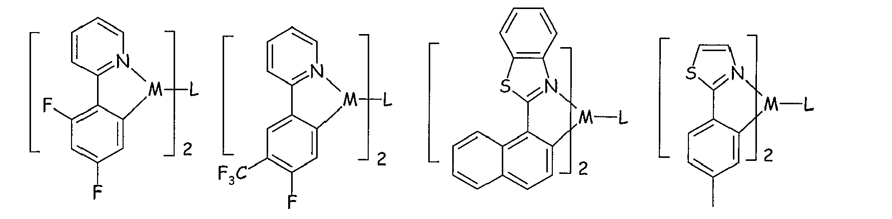 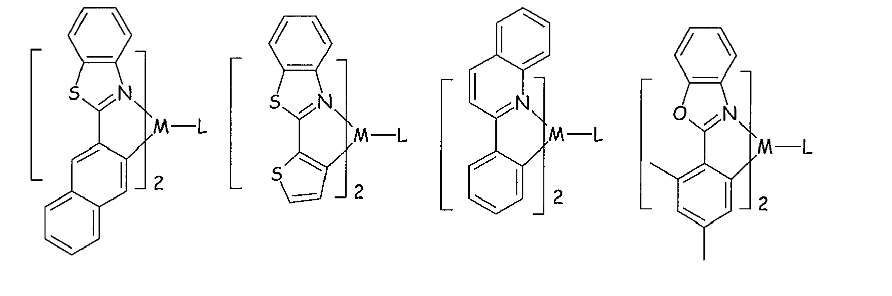 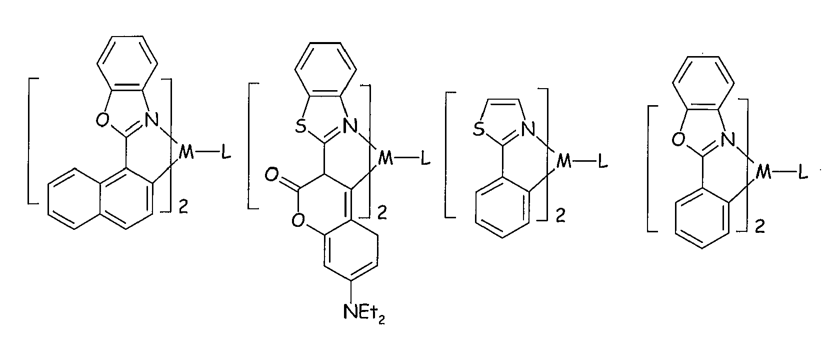 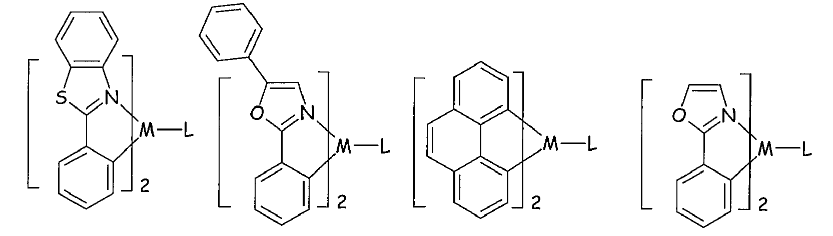 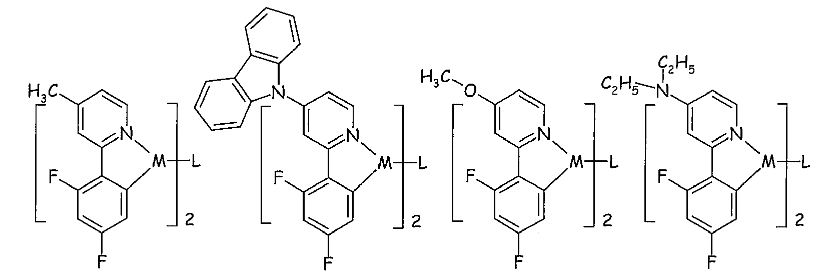 wherein L and M have the same meaning as above defined.

Preferably, the complex of the invention complies with formula (II) here below : 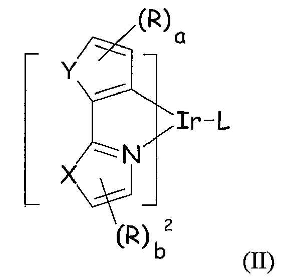 wherein :
L has the same meaning as above defined;
**X** is a group chosen among the group consisting of -CH=CH-, -CR=CH-, -CR=CR-, N-H, N-R¹, O, S or Se; preferably X is a group selected among -CH=CH-, -CR=CH- or S; most preferably X is -CH=CH-;
**Y** is a group chosen among the group consisting of -CH=CH-, -CR=CH-, -CR=CR-, N-H, N-R¹, O, S or Se; preferably Y is a group selected among -CH=CH-, -CR=CH- or S; most preferably Y is -CH=CH-;
**R** is the same or different at each occurrence and is F, Cl, Br, NO₂, CN; a straight-chain or branched or cyclic alkyl or alkoxy group or dialkylamino group having from 1 to 20 carbon atoms, in each of which one or more nonadjacent -CH₂- groups may be replaced by -O-, -S-, -NR¹-, or -CONR²-, and in each of which one or more hydrogen atoms may be replaced by F; an aryl or heteroaryl group having from 4 to 14 carbon atoms which may be substituted by one or more nonaromatic radicals -R; and a plurality of substituents R, either on the same ring or on the two different rings, may in turn together form a further mono- or polycyclic ring system, optionally aromatic.
**R¹ and R²** are the same or different at ea ch occurrence and are each H or an aliphatic or aromatic hydrocarbon radical having from 1 to 20 carbon atoms;
**a** is an integer from 0 to 4;
**b** is an integer from 0 to 4.

More preferably, the chelate monoionic ligand (L) is selected from the structures represented by following formulae (III) to (VII) or tautomers thereof : 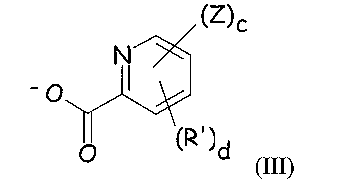 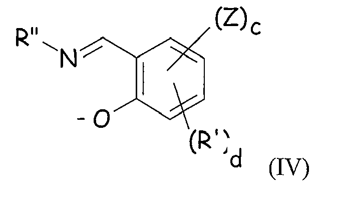 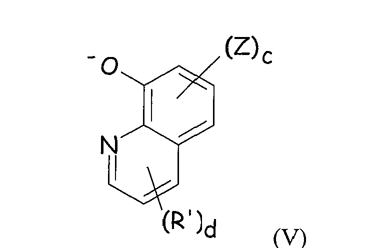 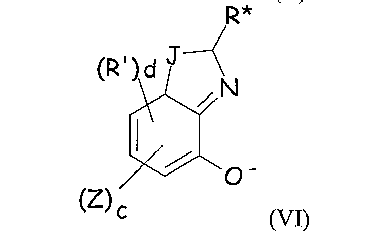 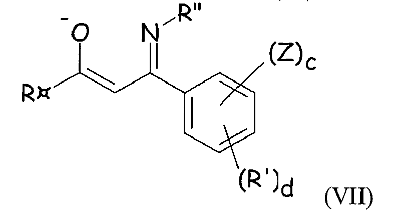 wherein :
**Z** substituent selected from the group consisting of halogens, such as -Cl, -F, -Br; -OR₀; -SR₀; -N(R₀)₂; -P(OR₀)₂ and -P(R₀)₂; wherein R₀ is a C₁-C₆ alkyl, fluoro- or perfluoroalkyl, e.g. -CH₃, -nC₄H₉, -iC₃H₇, -CF₃, -C₂F₅, -C₃F₇ or a C₁-C₆ alkyl, fluoro- or perfluoroalkyl having one or more ether groups, e.g. -CH₂-(CH₂-O-CH₂)*ₙ*-CH₃, -CH₂-[CH₂(CH₃)-O-CH₂]*ₙ*-CH₃, -(CF₂O)*ₙ*-C₂F₅, with n being an integer from 1 to 8.
**J** is a group chosen among the group consisting of -CH=CH-,
-CR=CH-, -CR=CR-, N-H, N-R¹, O, S or Se;
**R', R*,** 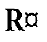 the same or different each other at each occurrence, represent F, Cl, Br, NO₂, CN, a straight-chain or branched or cyclic alkyl or alkoxy group having from 1 to 20 carbon atoms, in each of which one or more nonadjacent -CH₂- groups may be replaced by -O-, -S-, -NR¹-, or -CONR²-, and in each of which one or more hydrogen atoms may be replaced by F; or an aryl or heteroaryl group having from 4 to 14 carbon atoms which may be substituted by one or more nonaromatic radicals -R'; and a plurality of substituents R', either on the same ring or on the two different rings, may in turn together form a further mono- or polycyclic ring system, optionally aromatic;
**R", R¹** and **R²** are the same or different at ea ch occurrence and are each H or an aliphatic or aromatic hydrocarbon radical having from 1 to 20 carbon atoms;
**c** is an integer from 1 to 3;
**d** is an integer from 0 to 4.

To the purpose of the invention, the term tautomer is intended to denote one of two or more structural isomer that exist in equilibrium and are readily converted from one isomeric form to another, by, for instance, simultaneous shift of electrons and/or of a hydrogen atom.

Good results have been obtained with chelate monoionic ligand (L) as above described (formulae III to VII), wherein the group Z is -OR₀ or -N(R₀)₂ wherein R₀ is a C₁-C₆ alkyl, fluoro- or perfluoroalkyl, e.g. -CH₃, -nC₄H₉, -iC₃H₇, -CF₃, -C₂F₅, -C₃F₇ or a C₁-C₆ alkyl, fluoro- or perfluoroalkyl having one or more ether groups, e.g. -CH₂-(CH₂-O-CH₂)*ₙ*-CH₃, -CH₂-[CH₂(CH₃)-O-CH₂]*ₙ*-CH₃, -(CF₂O)*ₙ*-C₂F₅, with n being an integer from 1 to 8.

Preferably the chelate monoionic ligand (L) is chosen among the group consisting of structures (III), (IV) and (V) here above.

Most preferably, the chelate monoionic ligand (L) responds to formula (III) or (IV) here above.

Light emitting materials particularly suitable for the invention comprises a complex of formula (VIII) or (IX) here below : 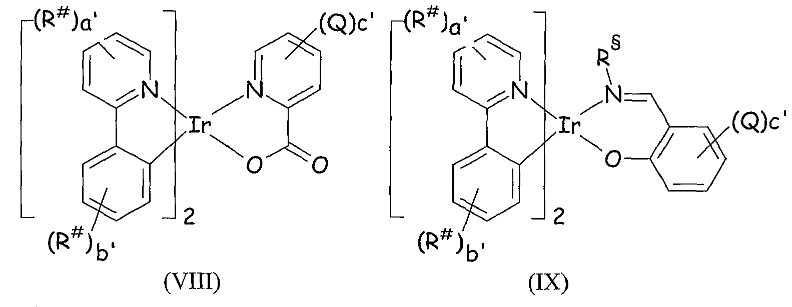 wherein :
**Q** is -OR₀ or -N(R₀)₂ wherein R₀ is a C₁-C₆ alkyl, fluoro- or perfluoroalkyl, e.g. -CH₃, -nC₄H₉, -iC₃H₇, -CF₃, -C₂F₅, -C₃F₇ or a C₁-C₆ alkyl, fluoro- or perfluoroalkyl having one or more ether groups, e.g. -CH₂-(CH₂-O-CH₂)*ₙ*-CH₃, -CH₂-[CH₂(CH₃)-O-CH₂]*ₙ*-CH₃, -(CF₂O)*ₙ*-C₂F₅, with n being an integer from 1 to 8; c' being an integer between 1 and 3.
**R^{#}** the same or different at each occurrence, is F, Cl, Br, NO₂, CN, a straight-chain or branched or cyclic alkyl or alkoxy group or dialkylamino group having from 1 to 20 carbon atoms, in each of which one or more nonadjacent -CH₂- groups may be replaced by -O-, -S-, -NR¹-, or -CONR²- (with R¹ and R² being each H or an aliphatic or aromatic hydrocarbon radical having from 1 to 20 carbon atoms) and in each of which one or more hydrogen atoms may be replaced by F, or an aryl or heteroaryl group having from 4 to 14 carbon atoms which may be substituted by one or more nonaromatic radicals -R^{#}; and a plurality of substituents R^{#}, either on the same ring or on the two different rings, may in turn together form a further mono- or polycyclic ring system, optionally aromatic; a' and b', equal or different each other, are independently an integer between 0 and 4.
Light emitting materials which gave good results are those complying with formula (X) here below : 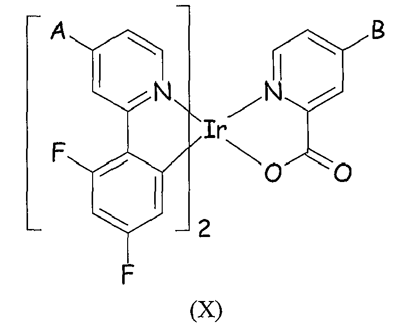 wherein :
**A** is selected from -R_{H}, -OR_{H}, -N(R_{H})₂, with R_{H} being a C₁-C₂₀ alkyl or alkyloxy group, preferably a methyl group; an aryl or heteroaryl group having from 4 to 14 carbon atoms, preferably a carbazole moiety of formula : 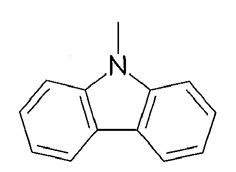
**B** is selected from -OR_{H}, and -N(R_{H"})₂, with R_{H}, being a C₁-C₂₀ alkyl or alkyloxy group, preferably -CH₂-(CH₂-O-CH₂)*ₙ*-CH₃ or -CH₂-[CH₂(CH₃)-O-CH₂]*ₙ*-CH₃, with n being an integer from 1 to 8, preferably n=1, and with R_{H"} being a C₁-C₂₀ alkyl group, preferably a n-butyl group.

Excellent results were obtained with light emitting materials comprising a complex of formula (XI) and/or (XII) here below :

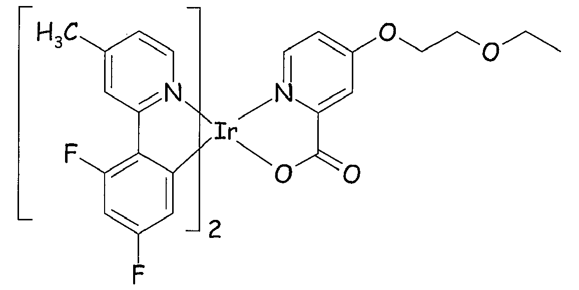

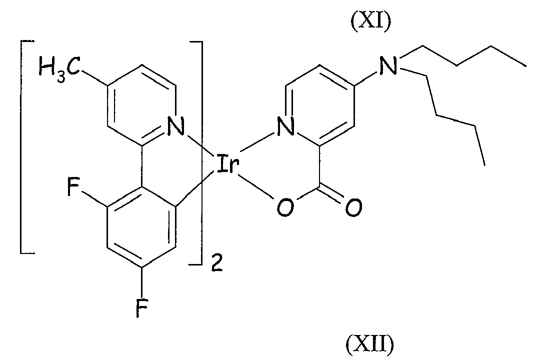

Complexes of formulae (XI) and (XII), comprising a substituted picolinate moiety as ancillary ligand are particulary advantageous for the purposes of the invention because of their chemical stability, which enable handling and treating them in further processing technologies without any risk of decomposition nor degradation.

The synthesis of complexes of formula (I) here above, i.e. metal complex comprising two orthometalated ligands (C^N ligands) and an ancillary ligand (L), as above specified, can be accomplished by any known method. Details of synthetic methods suitable for the preparation of complexes of formula (I) here above are notably disclosed in "Inorg. Chem.", No. 30, pag. 1685 (1991); "Inorg. Chem.", No. 27, pag. 3464 (1988); "Inorg. Chem.", No. 33, pag. 545 (1994); "Inorg. Chem. Acta", No. 181, pag. 245 (1991), "J. Organomet. Chem.", No. 35, pag. 293 (1987), "J. Am. Chem. Soc.", No. 107, pag. 1431 (1985).

Typically, the synthesis is carried out in two steps, according to the following scheme : 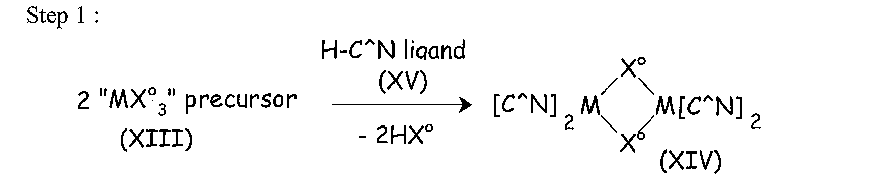 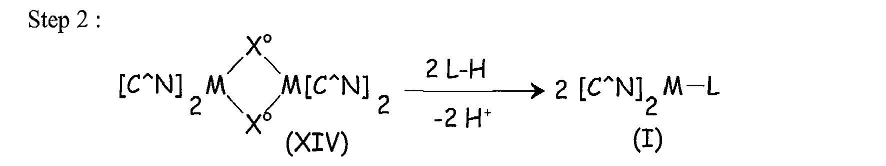 wherein X° is a halogen, preferably Cl, and M , L, C^N have the meaning as above defined.

Acid forms of the orthometalated ligands (H-C^N) and of ancillary ligands (L-H) can be either commercially available or easily synthesized by well-known organic synthesis reaction pathways.

Should the transition metal be iridium, trihalogenated iridium (III) compounds such as IrCl₃·H₂O, hexahalogenated Iridium (III) compounds, such as M°₃IrX°₆, wherein X° is a halogen, preferably Cl and M° is an alkaline metal, preferably K, and hexahalogenated iridium (IV) compounds such as M°₂IrX°₆, wherein X° is a halogen, preferably Cl and M° is an alkaline metal, preferably K (Ir halogenated precursors, hereinafter) can be used as starting materials to synthesize the complexes of formula (I), as above described.

[C^N]₂Ir(µ-X°)₂Ir[C^N]₂ complexes (XIV, M=Ir), with X° being a halogen, preferably Cl, can be thus prepared from said Ir halogenated precursors and the appropriate orthometalated ligand by literature procedures (S. Sprouse, K. A. King, P. J. Spellane, R. J. Watts, J. Am. Chem. Soc., 1984, 106, 6647-6653; M.E. Thompson et al., Inorg. Chem., 2001, 40(7), 1704; M.E. Thompson et al., J. Am. Chem. Soc., 2001, 123(18), 4304-4312).

Reaction is advantageously carried out using an excess of the neutral form of the orthometalated ligand (H-C^N); high-boiling temperature solvent are preferred.

To the purpose of the invention, the term high-boiling temperature solvent is intended to denote a solvent having a boiling point of at least 80 °C, preferably of at least 85 °C, more preferably of at least 90°C. Suitable solvents are for instance ethoxyethanol, glycerol, dimethylformamide (DMF), N-methylpirrolidone (NMP), dimethylsulfoxide (DMSO), and the like; said solvents can be used as such or in admixture with water.

Optionally reaction can be carried out in the presence of a suitable Bronsted base.

[C^N]₂IrL complexes can be finally obtained by reaction of said [C^N]₂Ir(µ-X°)₂Ir[C^N]₂complex with the acid form of the ancillary ligand (L-H). The reaction:

[C^N]₂Ir(µ-X°)₂Ir[C^N]₂ + L-H → [C^N]₂IrL + H-X° is preferably carried out in a high-boiling temperature solvent.

Suitable high-boiling temperature solvents are notably alcohols such as ethoxyethanol, glycerol, DMF, NMP, DMSO and the like; said solvents can be used as such or in admixture with water.

The reaction is preferably carried out in the presence of a Brønsted base, such as metal carbonates, in particular potassium carbonate (K₂CO₃), metal hydrides, in particular sodium hydride (NaH), metal ethoxide or metal methoxide, in particular NaOCH₃, NaOC₂H₅.

The present invention is also directed to the use of light emitting materials as above described in emitting layers of organic light emitting devices (OLED).

Furthermore, the present invention is directed to the use of light emitting materials as above described as dopants in a host layer, functioning as an emissive layer in organic light emitting diodes.

Should the light emitting material used as dopant in a host layer, it is generally used in an amount of at least 1 % wt, preferably of at least 3 % wt, more preferably of least 5 % wt with respect to the total weight of the host and the dopant and generally of at most 25 % wt, preferably at most 20 % wt, more preferably at most 15 % wt.

The present invention is also directed to organic light emitting devices (OLED) wherein the emissive layer comprises the light emitting material as above described, optionally with a host material (wherein the light emitting material as above described is present as a dopant in said host material), which material is notably adapted to luminesce when a voltage is applied across the device structure.

The OLED generally comprises :
- a glass substrate;
- an anode, generally transparent anode, such as an indium-tin oxide (ITO) anode;
- a hole transporting layer (HTL);
- an emissive layer (EML);
- an electron transporting layer (ETL);
- a cathode, generally a metallic cathode, such as an A1 layer.

For a hole conducting emissive layer, one may have an exciton blocking layer, notably a hole blocking layer (HBL) between the emissive layer and the electron transporting layer. For an electron conducting emissive layer, one may have an exciton blocking layer, notably an electron blocking layer (EBL) between the emissive layer and the hole transporting layer. The emissive layer may be equal to the hole transporting layer (in which case the exciton blocking layer is near or at the anode) or to the electron transporting layer (in which case the exciton blocking layer is near or at the cathode).

The emissive layer may be formed with a host material in which the light emitting material as above described resides as a guest or the emissive layer may be formed of the light emitting material as above described itself. In the former case, the host material may be a hole-transporting material selected from the group of substituted tri-aryl amines. The host material may be an electron-transporting material selected from the group of metal quinoxolates, oxadiazoles and triazoles. An example of a host material is 4,4'-N,N'-dicarbazole-biphenyl ["CBP"], which has the formula :

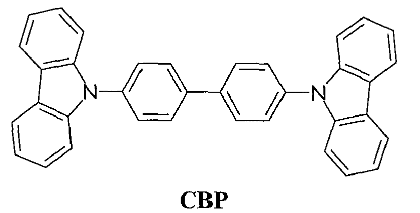

Optionally, the emissive layer may also contain a polarization molecule, present as a dopant in said host material and having a dipole moment, that affects the wavelength of light emitted when said light emitting material as above described, used as dopant, luminesces.

A layer formed of an electron transporting material is advantageously used to transport electrons into the emissive layer comprising the light emitting material and the (optional) host material. The electron transporting material may be an electron-transporting matrix selected from the group of metal quinoxolates, oxadiazoles and triazoles. An example of an electron transporting material is tris-(8-hydroxyquinoline)aluminum of formula ["Alq₃"] :

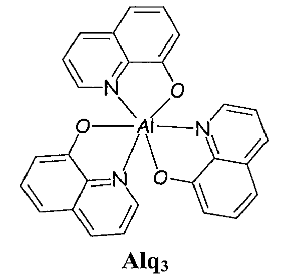

A layer formed of a hole transporting material is used to transport holes into the emissive layer comprising the light emitting material as above described and the (optional) host material. An example of a hole transporting material is 4,4'-bis[N-(1-naphthyl)-N-phenylamino]biphenyl ["α-NPD"].

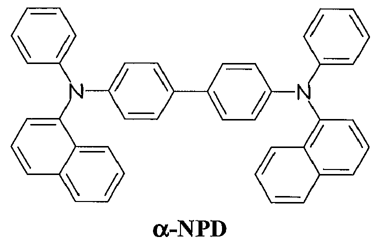

The use of an exciton blocking layer ("barrier layer") to confine excitons within the luminescent layer ("luminescent zone") is greatly preferred. For a hole-transporting host, the blocking layer may be placed between the emissive layer and the electron transport layer. An example of a material for such a barrier layer is 2,9-dimethyl-4,7-diphenyl-1,10-phenanthroline (also called bathocuproine or "BCP"), which has the formula :

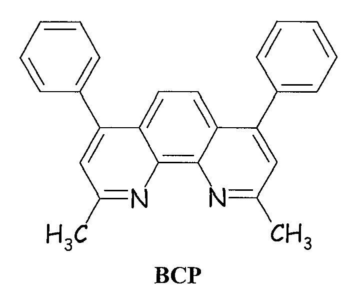

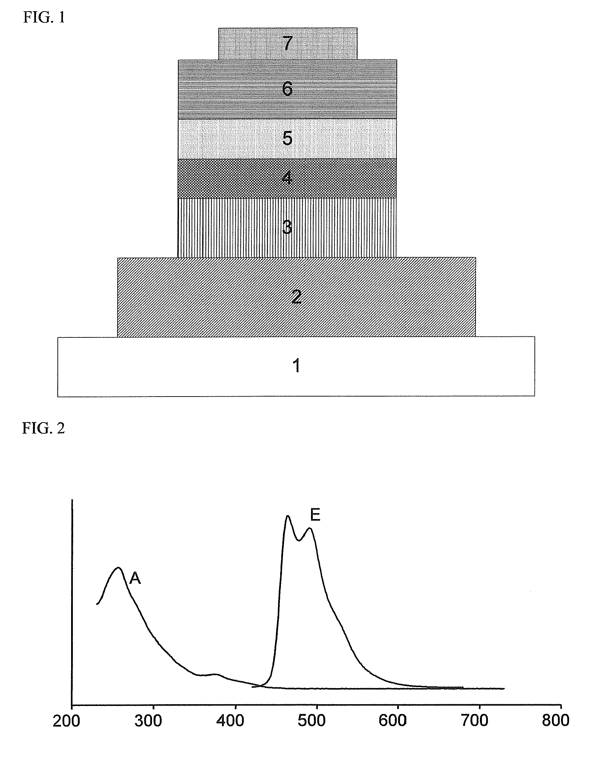

The OLED has preferably a multilayer structure, as depicted in Figure 1,
wherein **1** is a glass substrate, **2** is an ITO layer, **3** is a HTL layer comprising α-NPD, **4** is an EML comprising CBP as host material and the light emitting material as above defined as dopant in an amount of about **8** % wt with respect to the total weight of host plus dopant; **5** is a HBL comprising BCP; **6** is an ETL comprising Alq₃; **7** is an Al layer cathode.

Some examples of the present invention are reported hereinafter, whose purpose is merely illustrative but not limitative of the scope of the invention itself.

### NMR spectroscopy

NMR spectra have been recorded using an Oxford NMR spectrometer or a Varian Mercury Plus spectrometer, both operating at 300 MHz.

### UV-VIS spectroscopy

UV-visible spectra were measured on a Shimadzu model UV-3101PC (UV-vis-nir scanning spectrophotometer). UV-visible spectra were carried out in ethanol solutions at concentration of 0.01 to 0.02 mM.

### Photoluminescence spectroscopy

Photoluminescent spectra were measured on a JASCO model FP-750 spectrofluorometer. Photoluminescent spectra measurements (at concentration of from 0.001 to 0.002 mM) were carried out at room temperature in ethanol solution using excitation wavelength of 375 nm. Emission quantum yields were determined using *fac-Ir(tpy)₃* as a reference

### Thin layer chromatography (TLC)

Thin layer chromatography (TLC) was performed using silica plates.

### Example 1

### Synthesis of (2,4-difluorophenyl)-4methylpyridine (d-Fppy)

The d-Fppy has bee synthesized according to the reaction scheme embedde here below :

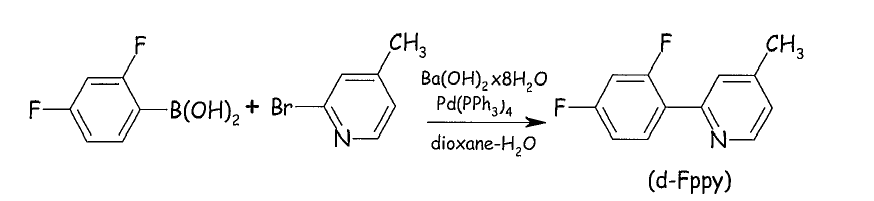

In a 250 ml one-necked round bottom flask equipped with a condenser were placed 2,4-difluorophenylboronic acid (available from Aldrich Chem., 4 g, 25.3 mmol), Ba(OH)₂·8H₂O (available from Aldrich Chem., 24 g, 76.0 mmol), and Pd(PPh₃)₄ (available from TCI Co., 1.83 g, 1.6 mmol). The reaction flask was evacuated and filled with Ar gas three times. 1,4-Dioxane (90 ml), H₂O (30 ml), and 2-bromo-4-methylpyridine (available from TCI Co., 2.26 ml, 20.3 mmol) were added. The reaction mixture was refluxed for 24 hr under Ar gas and cooled to room temperature. The dioxane was removed and the contents were poured into CH₂Cl₂ (150 ml), the precipitate was removed through filter paper, and the organic layer washed with 1M-NaOH aqous solution (2×150 ml) and saturated aqueous NaCl (150 ml), and dried over Na₂SO₄. After evaporation of the solvent, purification of the product by liquid chromatography (silica gel, elution with 1:15 EtOAc/*n*-hexane) provided 2.91 g (70%) of d-Fppy, (2-(2,4-Difluorophenyl)-4-methylpyridine) as an oil.

TLC R_{f}= 0.51 (1:4 EtOAc/*n*-hexane); ¹H NMR (300MHz, CDCl₃) : δ 2.43 (s, 3H), 7.11-7.20 (m, 3H), 7.63 (s, 1H), 8.08 (q, 1H) 8.53 (d, 1H)

### Example 2

### Synthesis of cyclometalated Ir(III)-µ-chloro-bridge dimer with d-Fppy [(dFppy)₂Ir(µ-Cl)₂Ir(dFppy)₂]

Cyclometalated Ir(III) µ-chloro-bridge dimmer,
**[(dFppy)₂Ir(µ-Cl)₂Ir(dFppy)₂]** was synthesized according to the method reported by Nonoyama in Bull. Chem. Soc. Jpn., No. 47, pag. 767 (1974), as depicted in the reaction scheme here below :

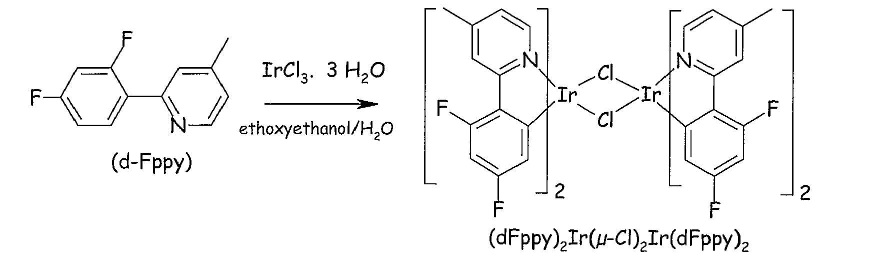

In a 100 ml one-necked round bottom flask equipped with a condenser were placed 2-(2,4-difluorophenyl)-4-methylpyridine (2.1 g, 10.3 mmol), IrCl₃·3H₂O (available from Across Organics, 1.80 g, 5.2 mmol), 2-ethoxyethanol (available from Aldrich Chem., 22.5 ml); finally H₂O (7.5 ml) was added. The flask was evacuated and filled with Ar gas three times. The reaction mixture was refluxed for 15 hr under Ar gas and cooled to room temperature. The colored precipitate was filtered off and was washed with water, followed by 4 portions of ethanol (yield 80%).
¹H-NMR (300MHz, CDCl₃)
δ 2.67 (s,12H), 5.30~5.34 (m, 4H), 6.34 (t, 4H), 6.60 (d, 4H), 8.14 (s, 4H), 8.89 (q, 4H). Elemental Analysis: *Found* C 45.57, H 2.40 N 4.37. *Calcd* C 45.32, H 2.54, N 4.40

### Example 3

### Synthesis of Synthesis of [iridium(III) bis(2-(2,4-difluorophenyl)-4-methylpyridinato-N,C^{2'})-4-(2-ethoxyethoxy)picolinate] [Me(dFppy)₂Ir(EtOPic)]

**Me(dFppy)₂Ir(EtOPic)** was obtained from the reaction of **(dFppy)₂Ir(µ-Cl)₂Ir(dFppy)₂** and 4-chloropicolinic acid in the solvent 2-ethoxyethanol, according to the following reaction scheme.

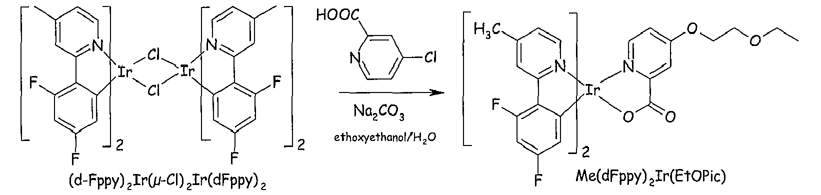

In a 50 ml one-necked round bottom flask equipped with a condenser were placed **[(dFppy)₂Ir(µ-Cl)₂Ir(dFppy)₂]** complex (0.182 g, 0.14 mmol), 4-chloropicolinic acid (TCI Co., 0.057 g, 0.36 mmol), sodium carbonate (0.16 g, 1.86 mmol); finally 2-ethoxyethanol (Aldrich Chem., 12 ml) was added. The flask was evacuated and filled with Ar gas three times. The reaction mixture was refluxed for 24 hr under Ar gas and cooled to room temperature. The 2-ethoxyethanol was removed under reduced pressure. The product was extracted with CH₂Cl₂. The combined organic layer was washed with brine, dried over Na₂SO₄, filtered, and concentrated. The light yellow residue was purified by chromatography over silica gel (1:4:0.1 EtOAc/*n*-hexane/methanol). Further purification of the product by crystallization (methylene chloride, n-hexane) provided 0.041 g (yield 70%) of **Me(dFppy)₂Ir(EtOPic)** [iridium(III) bis(2-(2,4-difluorophenyl)-4-methylpyridinato-*N,C^{2'}*) 4-(2-ethoxyethoxy)picolinate] as light yellow crystals.

TLC R_{f}= 0.16 (1:1:0.1 EtOAc/*n*-hexane/methanol) ; ¹H NMR (300MHz, CDCl₃) : δ 1.19-1.24 (t, 3H), 2.54 (s, 6H), 3.53-3.60 (q, 2H), 3.78-3.81 (t, 2H), 4.22-4.26 (q, 2H), 5.58-5.62 (dd,1H), 5.79-5.83 (dd, 1H), 6.36-6.44 (m, 2H), 6.78-6.80 (dd, 1H), 6.91-6.94 (dd,1H), 6.98-7.01 (dd, 1H), 7.27-7.29 (d,1H), 7.48-7.50 (d, 1H), 7.82-7.83 (d, 1H), 8.02 (s, 1H) 8.09 (s, 1H), 8.51-8.53 (d, 1H)

Figure 2 depicts the absorption (A) and emission (E) spectra of orthometalated complex of example 3 [wavelength in abscissa in nm; intensity (arbitrary units) in ordinate], showing a maximum of emission at (λₘₐₓ) 464 nm, with a quantum yield (Φ) of 0.69.

The luminescence spectrum of **Me(dFppy)₂Ir(EtOPic)** showed the appearance of a new strong second emission peak at 464 nm; portions of emission at the blue region is increased up to 64%. Major portion of the luminescence appeared at the blue region below 500 nm with a very high luminescence quantum yield (Φ = 0.69).

### Example 4

### Synthesis of iridium(III) bis(2-(2,4-difluorophenyl)-4-methylpyridinato-N,C^{2'})- 4-dibutylaminopicolinate) [Me(dFppy)₂Ir(dbNPic)]

**Me(dFppy)₂Ir(dbNPic)** was obtained from the reaction of **(dFppy)₂Ir(µ-Cl)₂Ir(dFppy)₂** and 4-chloropicolinic acid and n-butylamine in the presence of Na₂CO₃ in 2-ethoxyethanol, according to the following reaction scheme.

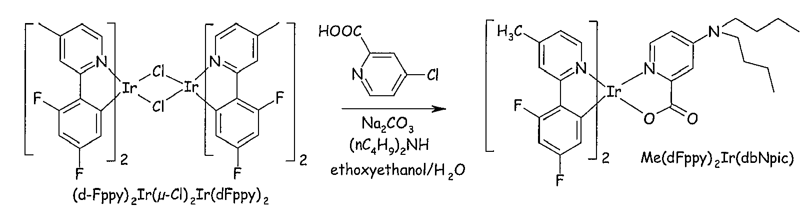

In a 50 ml one-necked round bottom flask equipped with a condenser were placed **[(dFppy)₂Ir(µ-Cl)₂Ir(dFppy)₂]** complex (0.165 g, 0.13 mmol), 4-chloropicolinic acid (TCI Co., 0.051 g, 0.32 mmol), sodium carbonate (0.14 g, 1.69 mmol), and n-dibutylamine (Aldrich Chem., 14 ml); 2-ethoxyethanol was finally added. The flask was evacuated and filled with Ar gas three times. The reaction mixture was refluxed for 24 hr under Ar gas and cooled to room temperature. The *n*-dibutylamine and the solvent were removed for evaporation. The product was extracted with CH₂Cl₂. The combined organic layer was washed with brine, dried over Na₂SO₄, filtered, and concentrated. The light yellow residue was purified by chromatography over silica gel (1:4:0.1 EtOAc/*n-*hexane/methanol). Additional purification of the product by crystallization (methylene chloride, *n*-hexane) provided 0.038 g (yield 70%) of **Me(dFppy)₂Ir(dbNPic)** [iridium(III) bis(2-(2,4-difluorophenyl)-4-methylpyridinato-*N,C^{2'}*) 4-dibutylamino-picolinate] as light yellow crystal.

TLC R_{f}= 0.44 (1:1:0.1 EtOAc/n-hexane/methanol) ; ¹H NMR (300MHz, CDCl₃) : δ 0.91-0.96 (t, 6H), 1.25-1.37 (m, 4H), 1.53-1.58 (m, 4H), 2.53-2.54 (d, 6H), 3.27-3.32 (dd, 4H), 5.59-5.63 (dd, 1H), 5.79-5.83 (dd,1H), 6.30-6.44 (m, 2H), 6.35-6.39 (q,1H) 6.80-6.83 (dd,1H), 7.00-7.03 (dd,1H), 7.18-7.20 (d,1H), 7.43-7.47 (d, 1H), 7.45-7.46 (d, 1H), 8.02 (s, 1H), 8.07 (s, 1H), 8.56-8.58 (d, 1H)

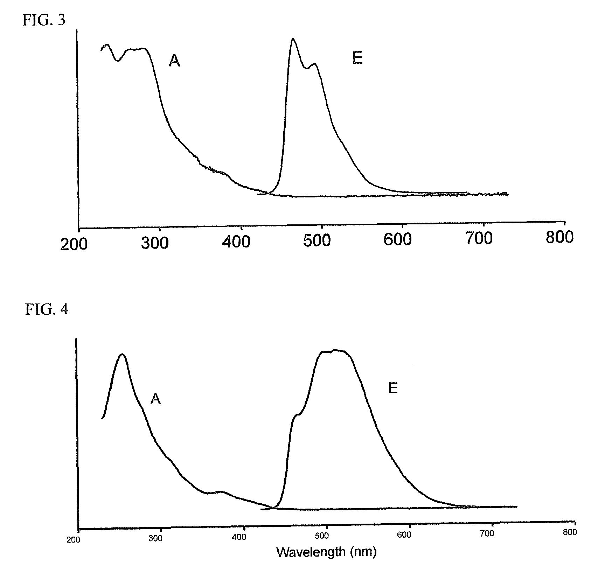

Figure 3 depicts the absorption (A) and emission (E) spectra of orthometalated complex of example 3 [wavelength in abscissa in nm; intensity (arbitrary units) in ordinate], showing a maximum of emission at (λₘₐₓ) 466 nm, with a quantum yield (Φ) of 0.57.

**Me(dFppy)₂Ir(dbNPic)** having a strong electron donating dialkyl amino group on its ancillary picolinato ligand was shown to have an emission peak in its luminescence spectrum at 466 nm; roughly 66% of the luminescence intensity was found to appear at blue region below 500 nm.

### Example 5 (COMPARATIVE)

### Synthesis of Me(dFppy)₂Ir(Pic) [iridium(III) bis(2-(2,4-difluorophenyl)-4-methylpyridinato-N,C^{2'})picolinate]

**Me(dFppy)₂Ir(Pic)** was obtained from the reaction of **(dFppy)₂Ir(µ-Cl)₂Ir(dFppy)₂** and 4-chloropicolinic acid in the solvent 2-ethoxyethanol, according to the following reaction scheme.

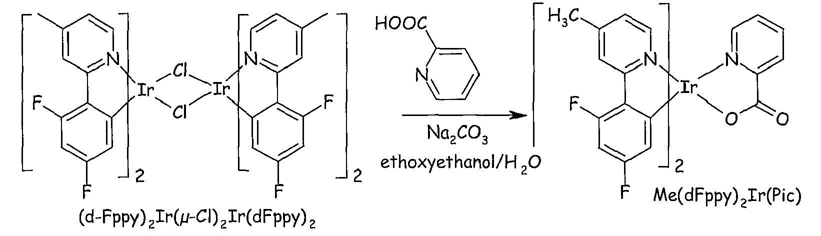

In a 50 ml one-necked round bottom flask equipped with a condenser were placed **[(dFppy)₂Ir(µ-Cl)₂Ir(dFppy)₂]** complex (0.28 g, 0.22 mmol), 2-picolinic acid (Aldrich Chem., 0.068 g, 0.55 mmol), sodium carbonate (0.24 g, 2.86 mmol); finally 2-ethoxyethanol (Aldrich Chem., 18 ml) was added. The flask was evacuated and filled with Ar gas three times. The reaction mixture was refluxed for 20 hr under Ar gas and cooled to room temperature. The 2-ethoxyethanol was removed under reduced pressure and the product was extracted with CH₂Cl₂. The combined organic layer was washed with brine, dried over Na₂SO₄, filtered, and concentrated. The light yellow residue was purified by chromatography over silica gel (1:4:0.1 EtOAc/*n*-hexane/methanol). Further purification of the product by crystallization (methylene chloride, n-hexane) provided 0.036 g (yield 75%) of **Me(dFppy)₂Ir(Pic)** [iridium(III) bis(2-(2,4-difluorophenyl)-4-methylpyridinato-*N,C^{2'}*) picolinate] as light yellow crystal.

TLC R_{f}= 0.21 (1:1:0.1 EtOAc/*n*-hexane/methanol) ; ¹H NMR (300MHz, CDCl₃) : δ 2.52 (s, 6H), 5.56-5.60 (dd, 1H), 5.80-5.84 (dd, 1H), 6.30-6.48 (m, 2H), 6.76-6.79 (dd, 1H), 6.98-7.00 (dd, 1H), 7.22-7.24 (d,1H), 7.36-7.42 (td,1H), 7.74-7.76 (d,1H), 7.88-7.94 (td,1H), 8.03 (s, 1H), 8.08 (s, 1H), 8.29-8.31 (d,1H), 8.52-8.54 (d, 1H)

Figure 4 depicts the absorption (A) and emission (E) spectra of orthometalated complex of example 5 [wavelength in abscissa in nm; intensity (arbitrary units) in ordinate], showing a maximum of emission at (λₘₐₓ) 512 nm, with a quantum yield (Φ) of 0.44.

**Me(dFppy)₂Ir(Pic)** bearing no substituent on its ancillary picolinato ligand was shown to have an emission peak in its luminescence spectrum at 512 nm (green region) and a lower quantum efficiency with respect to substituted complexes of examples 3 and 4.

## Claims

1. - Light emitting material comprising a complex of formula (I) : 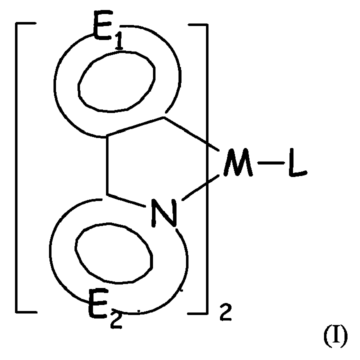 wherein :
**M** represents a transition metal of atomic number of at least 40;
**E₁** represents a nonmetallic atom group required to form a 5- or 6-membered aromatic or heteroaromatic ring, optionally condensed with additional aromatic moieties or non aromatic cycles, said ring optionally having one or more substituents, optionally forming a condensed structure with the ring comprising E₂, said ring coordinating to the metal M via a sp² hybridized carbon;
**E₂** represents a nonmetallic atom group required to form a 5- or 6-membered heteroaromatic ring, optionally condensed with additional aromatic moieties or non aromatic cycles, said ring optionally having one or more substituents, optionally forming a condensed structure with the ring comprising E₁, said ring coordinating to the metal M via a sp² hybridized nitrogen;
**L** is a chelate monoionic ligand, also designated as ancillary ligand, coordinating to the metal M through at least one oxygen atom and at least one sp² hybridized nitrogen atom, comprising at least one aromatic and/or heteroaromatic ring, said ring comprising at least one substituent selected from the group consisting of halogens, such as -Cl, -F, -Br; -OR₀; -SR₀; -N(R₀)₂; -P(OR₀)₂ and -P(R₀)₂; wherein R₀ is a C₁-C₆ alkyl, fluoro- or perfluoroalkyl, e.g. -CH₃, -nC₄H₉, -iC₃H₇, -CF₃, -C₂F₅, -C₃F₇ or a C₁-C₆ alkyl, fluoro- or perfluoroalkyl having one or more ether groups, e.g. -CH₂-(CH₂-O-CH₂)*ₙ*-CH₃, -CH₂-[CH₂(CH₃)-O-CH₂]*ₙ*-CH₃, -(CF₂O)*ₙ*-C₂F₅, with n being an integer from 1 to 8.

2. - Light emitting material according to Claim 1, **characterized in that** M is Ir.

3. - Light emitting material according to Claim 2, **characterized in that** it complies with formula (II) here below : 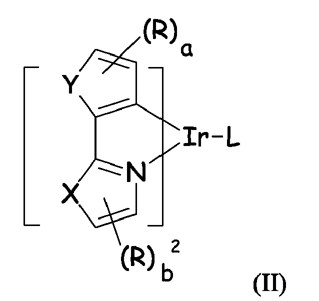 wherein :
**L** has the same meaning as defined in Claim 1; **X** is a group chosen among the group consisting of -CH=CH-, -CR=CH-, -CR=CR-, N-H, N-R¹, O, S or Se; preferably X is a group selected among -CH=CH-, -CR=CH- or S; most preferably X is -CH=CH-;
**Y** is a group chosen among the group consisting of -CH=CH-, -CR=CH-, -CR=CR-, N-H, N-R¹, O, S or Se; preferably Y is a group selected among -CH=CH-, -CR=CH- or S; most preferably Y is -CH=CH-;
**R** is the same or different at each occurrence and is F, Cl, Br, NO₂, CN; a straight-chain or branched or cyclic alkyl or alkoxy group or dialkylamino group having from 1 to 20 carbon atoms, in each of which one or more nonadjacent -CH₂- groups may be replaced by -O-, -S-, -NR¹-, or -CONR²-, and in each of which one or more hydrogen atoms may be replaced by F; an aryl or heteroaryl group having from 4 to 14 carbon atoms which may be substituted by one or more nonaromatic radicals -R; and a plurality of substituents R, either on the same ring or on the two different rings, may in turn together form a further mono- or polycyclic ring system, optionally aromatic.
**R¹ and R²** are the same or different at each occurrence and are each H or an aliphatic or aromatic hydrocarbon radical having from 1 to 20 carbon atoms;
**a** is an integer from 0 to 4;
**b** is an integer from 0 to 4.

4. - Light emitting material according to anyone of preceding Claims, **characterized in that** the chelate monoionic ligand (L) is selected from the structures represented by following formulae (III) to (VII) or tautomers thereof: 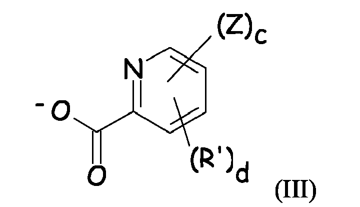 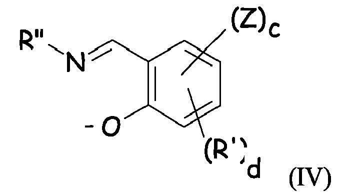 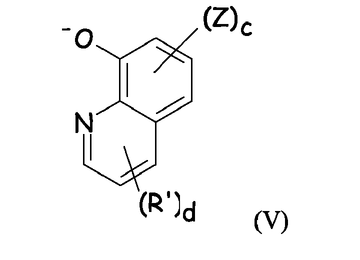 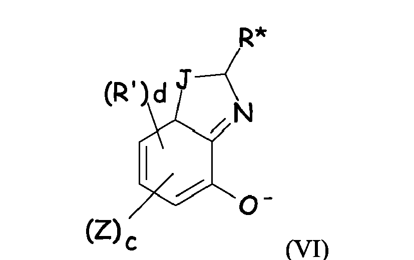 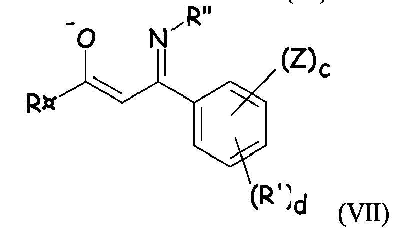 wherein :
**Z** substituent selected from the group consisting of halogens, such as -Cl, -F, -Br; -OR₀; -SR₀; -N(R₀)₂; -P(OR₀)₂ and -P(R₀)₂; wherein R₀ is a C₁-C₆ alkyl, fluoro- or perfluoroalkyl, e.g. -CH₃, -nC₄H₉, -iC₃H₇, -CF₃, -C₂F₅, -C₃F₇ or a C₁-C₆ alkyl, fluoro- or perfluoroalkyl having one or more ether groups, e.g. -CH₂-(CH₂-O-CH₂)*ₙ*-CH₃, -CH₂-[CH₂(CH₃)-O-CH₂]*ₙ* -CH₃, -(CF₂O)*ₙ*-C₂F₅, with n being an integer from 1 to 8.
**J** is a group chosen among the group consisting of -CH=CH-, -CR=CH-, -CR=CR-, N-H, N-R¹, O, S or Se;
**R', R*, R** 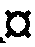 the same or different each other at each occurrence, represent F, Cl, Br, NO₂, CN, a straight-chain or branched or cyclic alkyl or alkoxy group having from 1 to 20 carbon atoms, in each of which one or more nonadjacent -CH₂- groups may be replaced by -O-, -S-, -NR¹-, or -CONR²-, and in each of which one or more hydrogen atoms may be replaced by F; or an aryl or heteroaryl group having from 4 to 14 carbon atoms which may be substituted by one or more nonaromatic radicals -R'; and a plurality of substituents R', either on the same ring or on the two different rings, may in turn together form a further mono- or polycyclic ring system, optionally aromatic;
**R", R¹** and **R²** are the same or different at ea ch occurrence and are each **H** or an aliphatic or aromatic hydrocarbon radical having from 1 to 20 carbon atoms;
**c** is an integer from 1 to 3;
**d** is an integer from 0 to 4.

5. - Light emitting material according to anyone of preceding Claims, **characterized in that** the complex complies with formula (X) here below : 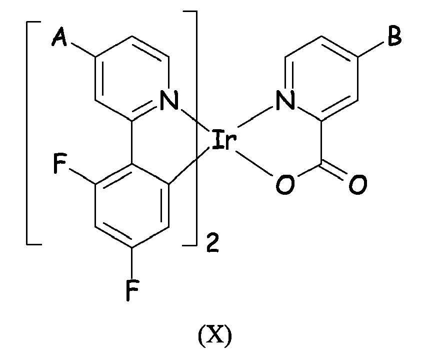 wherein :
**A** is selected from -R_{H}, -OR_{H}, -N(R_{H})₂, with R_{H} being a C₁-C₂₀ alkyl or alkyloxy group, preferably a methyl group; an aryl or heteroaryl group having from 4 to 14 carbon atoms, preferably a carbazole moiety of formula : 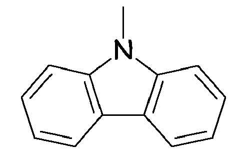
**B** is selected from -OR_{H}, and -N(R_{H"})₂, with R_{H}, being a C₁-C₂₀ alkyl or alkyloxy group, preferably -CH₂-(CH₂-O-CH₂)*ₙ*-CH₃ or -CH₂-[CH₂(CH₃)-O-CH₂]*ₙ*-CH₃, with *n* being an integer from 1 to 8, preferably n=1, and with R_{H"} being a C₁-C₂₀ alkyl group, preferably a n-butyl group.

6. - Light emitting material comprising complex :

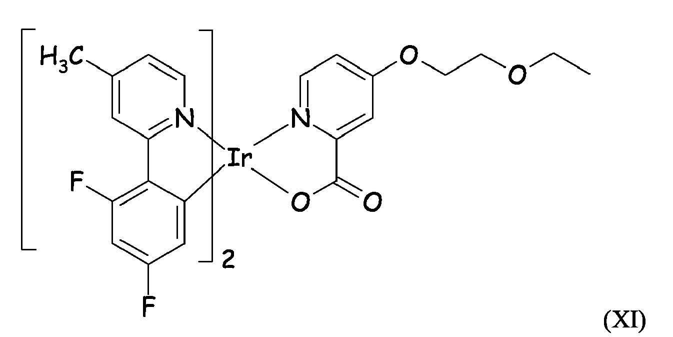

7. - Light emitting material comprising complex :

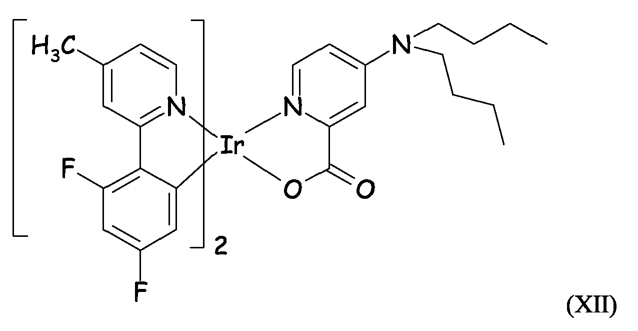

8. - Use of light emitting materials according to anyone of preceding claims in emitting layers of organic light emitting devices (OLED).

9. - Organic light emitting devices (OLED) wherein the emissive layer comprises the light emitting material of anyone of claims 1 to 7.

10. - Organic light emitting devices (OLED) according to claim 9, **characterized in that** the emissive layer comprises a host material and the light emitting material according to anyone of claims 1 to 7 is present as a dopant in said host material.
